Europäisches Patentamt

European Patent Office

Office européen des brevets

(11) Publication number: **0 425 446 A2**

## (12) EUROPEAN PATENT APPLICATION

(21) Application number: 90830390.2

(22) Date of filing: 05.09.90

(51) Int. Cl.5: **G01N 21/35, G01J 3/28**

(30) Priority: 24.10.89 IT 1258889

(43) Date of publication of application:
02.05.91 Bulletin 91/18

(84) Designated Contracting States:
AT BE CH DE DK ES FR GB GR LI LU NL SE

(71) Applicant: **ERIDANIA ZUCCHERIFICI**
**NAZIONALI S.P.A.**
**Corso A. Podestà 2**
**I-16128 Genoa(IT)**

(72) Inventor: **Vallini, Giorgio**
**Via Boselli 13/3**
**I-16146 Genoa(IT)**
Inventor: **Serra, Carlo**
**Via Turchi 6**
**I-44100 Ferrara(IT)**

Inventor: **Bigoni, Rodolfo**
**Via Botteghina 6**
**I-44030 Guarda Ferrarese Fe(IT)**
Inventor: **Gambetti, Gilberto**
**Via Luppi 51**
**I-44037 Iolanda Di Savoia Fe(IT)**
Inventor: **Rossin, Giancarlo**
**Via Magarino 15**
**I-45038 Polesella Ro(IT)**
Inventor: **Lodi, Silvano**
**Via A. Bottoni 7**
**I-44100 Ferrara(IT)**

(74) Representative: **Porsia, Attilio, Dr. et al**
**c/o Succ. Ing. Fischetti & Weber Via Caffaro**
**3/2**
**I-16124 Genova(IT)**

(54) **Device for the comparative analysis of organic samples.**

(57) The subject matter of this invention consists of a device for the comparative analysis of organic samples in order to identify foreign matter significant of the presence of a state of deterioration.

The device claims calls for a spectrometer (31) for near-infrared radiation reflectance analysis, as sociated with at least one storage unit (41) containing the statistical parameters of a spectrum representative of a sample containing no such foreign matter, defined briefly as "sound", and a calculating, comparing and amplifying unit (43), to compare and amplify the differences between the spectrum of a sample being tested and said statistical spectrum representative of the "sound" sample.

Fig. 5

## DEVICE FOR THE COMPARATIVE ANALYSIS OF ORGANIC SAMPLES

The subject matter of this invention consists of a device for the comparative analysis of organic samples, by means of near-infrared radiation reflectance analysis techniques.

It is well known that the proper growth of agricultural crops can be hindered by all kinds of adversities. Among these, in relatively recent times, some virus affections have also been identified. In the beet sector, in particular, a disease of viral origin known as rhizomania is becoming increasingly widespread in Italy and abroad. It causes considerable damages to the crop, reducing the saccharose yield per hectare.

The types of analytical determination known and practised up to the present time allow the presence of the virus to be recognised by means of a delicate and complex methodology giving a response which is delayed in time. In practice, recognition is carried out on frag ments taken from single beets and treated for this purpose with special reagents. These tests are therefore generally carried out by highly qualified person nel in laboratories which are usually located away from the places of production. It is thus rather difficult and complicated to carry out large-scale inves tigations giving operational responses with a suffi ciently short time.

The subject matter of this invention consists of a device for comparative analysis allowing a rapid assessment of the extent of the viral affection measured in the juice obtained by centrifuging or squeezing sugar beet flesh, with no need for any preliminary treatment. This assessment can also be carried out on the same sample of beet used to determine the saccharose content, sample that in the sugar industry is taken from each load delivered to the plant for processing. The test can therefore be carried out on a large scale, at the production facility, with practically immediate results.

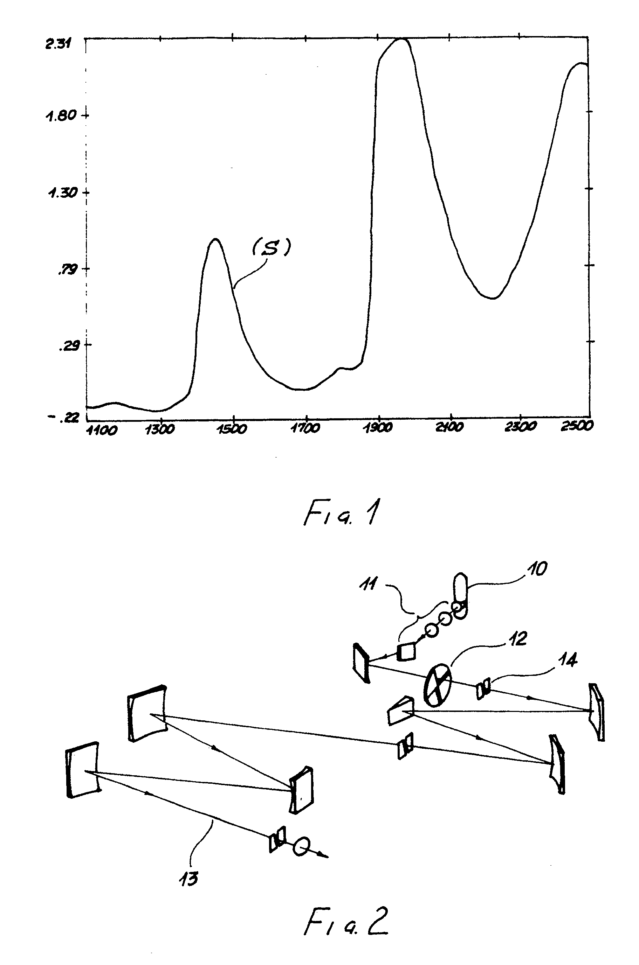

In figure 1, for example, the absorbance spectrum of a sugar beet extract is illustrated in which the wavelengths are indicated in (nm) along the x-co-ordinate, while the absorption coefficients, indicated by the abbreviation ABS, are indicated along the y-co-ordinate This absorption spectrum was obtained using an apparatus known in itself, schematically illustrated in figure 2, and which includes a lamp 10 and a switching system for a ray of monochromatic light obtained in a known manner by means of lenses, prisms and mirrors. The ray 13 is precisely said monochromatic ray leaving the apparatus.

The equipment illustrated schematically in figure 2 is generally associated with a dedicated computer capable of representing graphically the resulting spectrum. The crganic samples subjected to this type of analysis may contain small or large quantities of foreign matter which alter their absorption spectra to a smaller or greater extent depending on the type and quantity of said foreign matter. In some cases said foreign matter consists of the chemical substances which reveal the presence of a virus, and in this case their quantity is so minor that it will not alter to any great extent the absorption spectrum of the organic sample being examined.

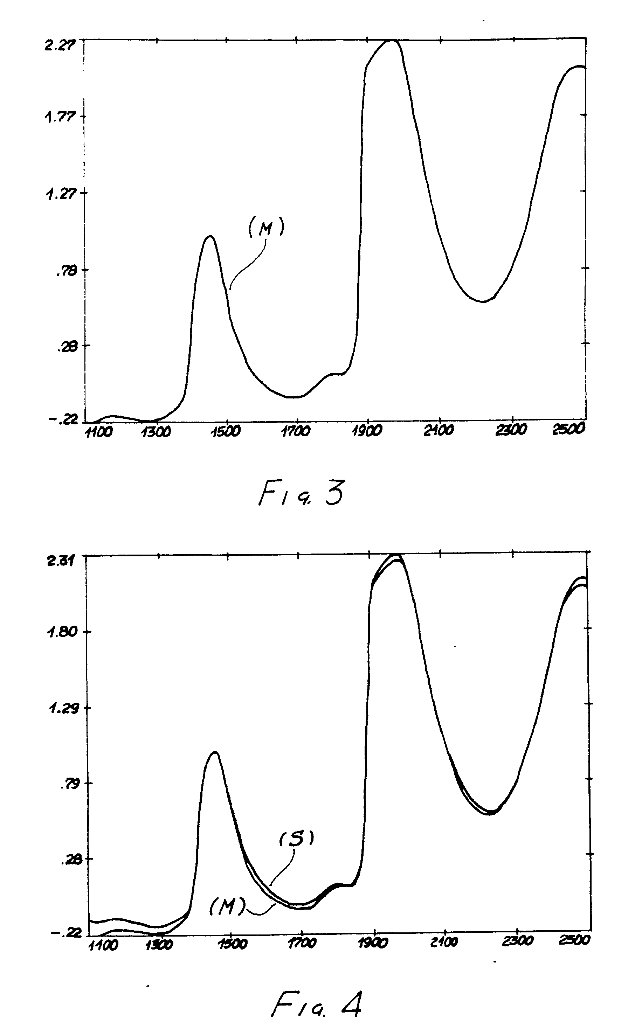

Again by way of example, figure 3 illustrates the absorption spectrum of an extract of beet affected by rhizomania. If this spectrum is superimposed on that of figure 1 referring to a "sound" beet extract, as shown in figure 4, the differences appear to be quite negligible and in any case quite unsuitable for providing the tester with any useful information as to the presence or otherwise of foreign matter indicative of the presence of the virus.

The analytical device which is the subject matter of this invention consists of a device for the comparative analysis of the near-infrared radiation reflectance of a liquid of an organic nature; in particular said organic liquid may consist of the juice obtained from the flesh of sugar beet. A summary examination of the spectra obtained for a sound product and from a product affected by rhizomania does not show any appreciable differences, however suitable mathematical processing of the comparison between the spectra, using appropriate devices, makes it possible to show up considerable differences, which allow the presence of the virus to be detected and the extent of the affection to be assessed.

The device according to the invention calls for the spectrometer for near-infrared radiation reflectance analysis of the known type to be associated with:

- a first storage unit containing the statistical parameters of a spectrum representative of a sample containing no impurities, in other words a "sound" sample, in that is does not contain the virus in question;
- a second storage unit containing the statistical parameters of the spectrum of a sample containing the maximum degree of the impurities associated with the virus responsible for the disease in question;
- a comparing and amplifying unit to compare and amplify the differences found between the spectrum of a sample being examined and the statistical sample representative of the sound sample;

- a numerical unit capable of quantifying the differences existing between the spectrum of the sample being tested and the statistical sample representative of a sound sample, and of comparing them with the statistical spectrum representative of a sample containing the virus in question at its maximum level, so as to define a numerical parameter representative of the extent of the disease.

It is obvious that the determination of the statistical spectra representative of the "sound" sample and of the sample "diseased" to the greatest extent requires an extensive series of traditional analyses.

However, once the information to be entered in said two storage units has been defined, testing of each new sample using the device according to the invention can be completed within a few tens of seconds, and generally speaking in less than one minute. This means that the device claimed allows total and systematic real-time testing of all the lots of material processed at the plant, even when these lots consist of innumerable fractions of different origins, each of which therefore requires a separate test.

With reference to the attached drawings, figure 1 shows the absorption spectrum of a sugar beet extract which, when examined in the traditional manner was found to contain no rhizomania virus; it is therefore the absorption spectrum of an extract which we may define as "sound". Figure 2 is a diagram of the equipment for near-infrared radiation reflectance analysis. Figure 3 is similar to figure 1, but refers to a "diseased" product". Figure 4 shows the spectra of figures 1 and 3 superimposed.

Figure 5 is a functional diagram of the claimed device. Figure 6 shows the graphic output of the device claimed for a sound sample. Figure 7 is similar to figure 6, but refers to a diseased sample. Figure 8 consists of the two foregoing figures, superimposed.

Figure 9 is a superimposition of the graphic outputs of the device claimed for four samples considered to be substantially sound, since they have less than 10% of the maximum rhizomania virus content. Figure 10 is similar to the previous figure, but it refers to "diseased" samples, with over 50% of the maximum rhizomania virus content.

The scale up to one hundred on the basis of which the extent of the disease is expressed has an empirical value. It is based on the agronomic yield of a crop very seriously affected by the virus and to which a value of 100 (one hundred) was attributed. Similarly, the value 0 (zero) is attributed to a crop found to be sound. It is therefore clear that the scale has no absolute value, as it was drawn up with reference to assessments of agronomic yields compared by means of traditional analytical tests.

Figures 1, 2, 3 and 4 have already been illustrated above. Generally speaking, in figures 1, 3 and 4, (S) and (Si) respectively indicate the spectrum of a sound sample, while (M) indicates the spectrum of a diseased sample.

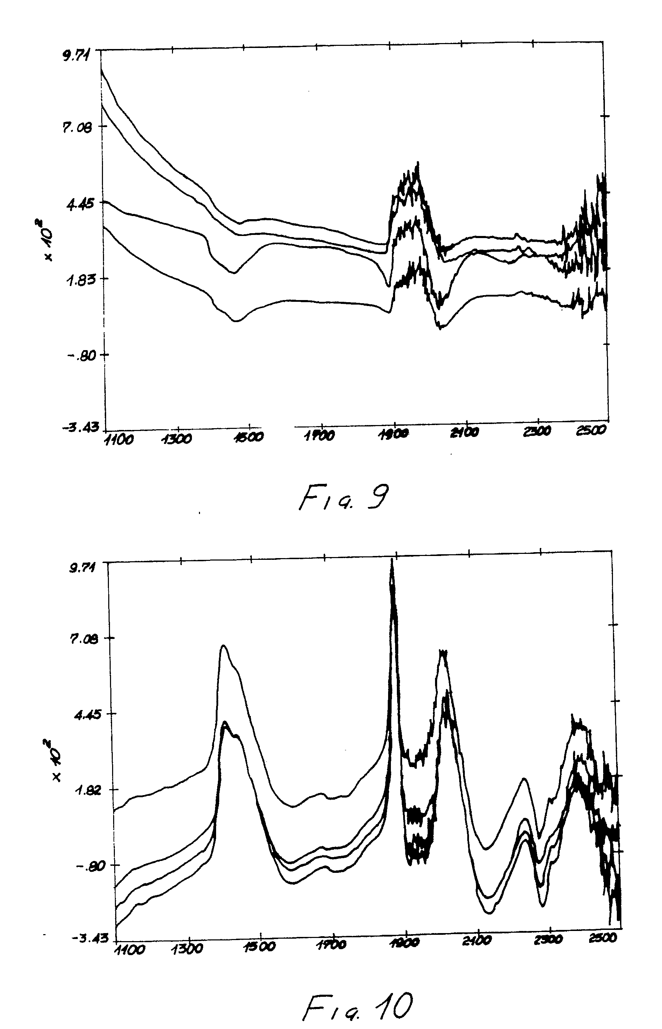

In figures 6 to 10, (DS, DS1, DS2, etc. ...) indicate the curves obtained by the difference between the spectra of a sample being tested and found to be sound and the statistical spectrum representative of the sound sample; (DM, DM1, DM2 ...) indicate the curves obtained by the difference between the spectra of a sample being tested and found to be diseased, and said statistical sample representative of the sound sample.

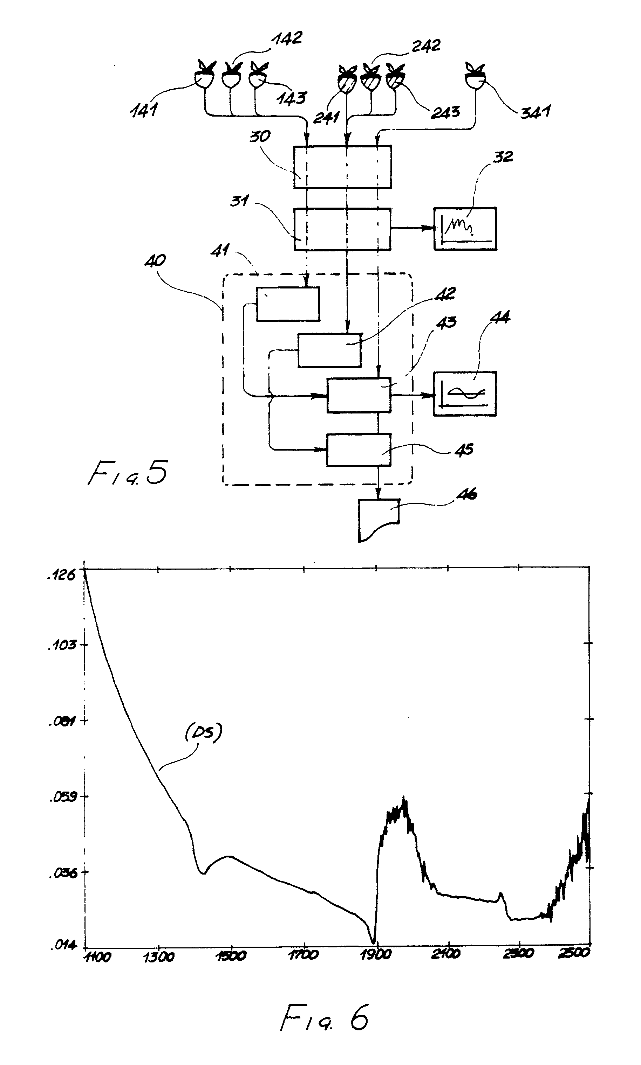

With specific reference to figure 5, 30 is an instrument capable of extracting and feeding pre-established doses of the juice of a sugar beet to a spectrograph 31 associated with means 32 for outputting the absorption spectrum of the sample being tested, and consisting of a video terminal or a plotter.

The signals from the spectrograph 31 are fed into a computer 40 equipped with a first memory 41 in which the statistical parameters of the significant spectrum of a "sound" compound have been stored; these parameters may be obtained by regression from the analysis of a suitable number of samples 141, 142, 143. These samples will have been tested by traditional means in order to determine that they have the characteristics of absolutely sound samples, and therefore their extracts will contain no foreign matter revealing the presence of the virus to be identified during the subsequent routine tests.

The computer 40 also has a second memory 42 in which, in a manner parallel to that of the first memory 41, the statistical parameters typical of the significant spectrum of a compound characterised by a level of disease taken to be the maximum are contained; again, these parameters may be obtained by regression from the analysis of a suitable number of samples 241, 242, 243. The status of maximum level of disease of the samples in question as above will have been ascertained by testing in a traditional manner.

The computer 40 also has a first computing unit, for instance an arithmetic unit, capable of subtracting, frequency by frequency, the absorption spectrum of a sample to be tested, indicated as 341, from the statistical spectrum representative of a sound sample, the parameters of which are contained in the first memory 41. Said first arithmetic unit is capable of amplifying to a suitable scale the difference between the two signals, for example those of figures 1 and 3, which, as shown in figure 4, without this appropriate amplification do not appear to have any significant differences. The difference between the two spectra (indicated with an unchanged scale in figure 4) gives rise in figures 6 and following, on the other hand, to an immediately recognisable graphic configuration, making it possible to see whether the current sample 341 is "sound" or "diseased", that is to say whether the sample being examined at the time contains the foreign substances being sought, and, in the specific case of the sugar beet, the substances which reveal the presence of the rhizomania virus.

For example, the difference (DS) between the spectrum (S) of the sound sample 341 and the statistical sample representative of a sound sample originating from the first memory 41 has the typical pattern shown in figure 6: the difference (DS) between these spectra shows a decrease as far as 1990 nm, a wide band peak between 1900 and 2100 nm, a large hollow between 2100 and 2300 nm, and then a slow increase.

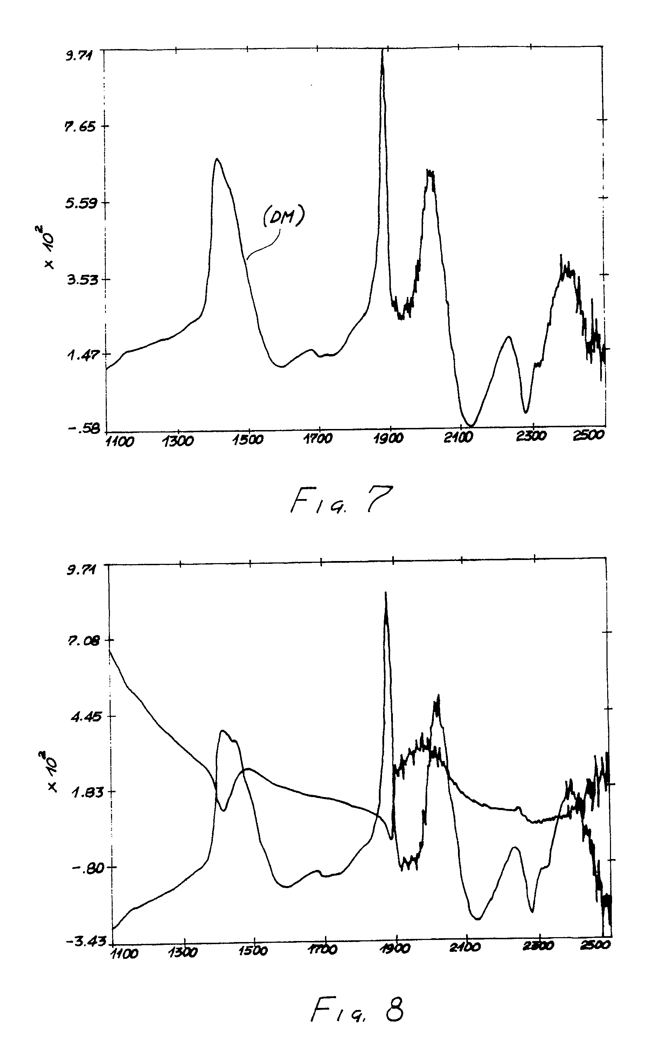

The spectrum (DM) showing the difference between the diseased sample (M) based on the analysis of a current sample 341 and the same statistical spectrum representative of a sound sample, originating from the above mentioned memory 41, on the other hand, has the typical pattern shown in figure 7: the difference (DM) shows three peaks, at about 1400, 1900 and 2000 nm, of which the intermediate peak at 1900 nm is a narrow-band peak. The difference (DM) between said spectra also has two hollows at about 2100 and 2300 nm, which, possible associated with the narrow-band peak at about 1900 nm, corresponds to a diseased state verified by means of traditional tests.

Thus the output signal 44 from the first arithmetic unit 43 allows the diseased or sound state of the current sample 431 to be identified. With the device claimed, however, it is possible to obtain a quantitative response capable of providing a numerical parameter significant of the "level" of the disease. This is done by means of the second memory 42 and the second arithmetic unit 45, in which the statistical parameters significant of a sample with the maximum level of the disease are stored.

The algorithm used in the first and second arithmetic units may be, in a manner known in itself, of the polynomial type, in which coefficients representative both of the sound sample and of the sample diseased to the maximum degree are associated with a suitable number of wavelengths.

For classifying the dgree of disease a suitably formed statistical parameter may be assumed, for example by the (DS) or (DM) signal variance as compared to statistical values representative of the sound sample, referred in percentage to the variance calculated for the sample statistically representative of the maximum level of disease. In this way it is possible to assess from a quantitative point of view and in a repeatable manner the degree of "health" of a certain number of sample examined. The assessment is based on the responses (DS1, DS2, DS3, ...) referred to samples with a level of rhizomania lower than 10 % and shown in figure 9.

In the same way it is possible to assess in a repeatable and quantitative manner the level of "disease" of the sample the responses for which (DM1, DM2, DM3, ...) are shown in figure 10. In this case the degree of rhizomania exceeds 50 %.

The spectra and the spectrum differences shown in the figure refer to sugar beet extracts either affected by rhizomania or sound. The same device, however, can also be applied to other diseases affecting sugar beet and caused by different viruses the presence of which can be associated with specific foreign substances. In the same way, the device can also be used to detect particular chemical characteristics associated or otherwise with specific diseases, in other agricultural produce such as tomatoes, potatoes and so on, or with organic products in general.

The invention must also be understood to include the test procedure carried out by the claimed device and consisting, in the manner described, of the analysis of a sound sample, of the storage of parameters representative of the spectrum of said pure sample, of the analysis of a current sample and of the comparison and amplification of the spectrum of the current sample with that of the pure reference sample.

## Claims

1. Device for the comparative analysis of organic samples in order to detect foreign substances significant of the presence of a state of deterioration. characterised by the fact that it calls for a spectrometer (31) for near infrared radiation reflectance analysis associated with:
- a storage unit (41) containing the statistical parameters of a spectrum representative of a sample containing none of said foreign substances, and defined briefly as "sound";
- a computing. comparing and amplification unit (43), in order to compare and amplify the differences existing between the spectrum of a sample being tested and said statistical spectrum representative of the "sound" sample.

2. Device for the comparative analysis of organic samples according to the foregoing claims, characterised by the fact that it has a spectrometer (31) for near-infrared reflectance analysis associated with:
- a first storage unit (41) containing the statistical parameters of a spectrum representative of a sample containing no foreign matter, defined briefly as "sound",

- a second storage unit (42) containing the statistical parameters of the spectrum representative of a sample containing the maximum quantity of foreign matter,

- a first computing, comparing and amplifying unit (43) to compare and amplify the differences existing between the spectrum of a sample being tested and the statistical spectrum representative of the "sound" sample,

- a second computing unit (45) capable of quantifying the differences existing between the spectrum of the sample being tested and the statistical spectrum representative of the sound "sample", and of comparing them with the statistical spectrum representative of the sample containing the maximum level of foreign matter.

3. Device for the comparative analysis of organic samples according to claim 1, characterised by the fact that upstream from said spectrometer (31), it has means for feeding (30) the substance to be tested.

4. Device for the comparative analysis of organic samples according to claim 1, characterised by the fact that downstream from said first computing unit (43) it has an output unit (44), preferably of the graphics type, to display the existing differences, for each wavelength, between the spectrum of the sample being tested and said statistical spectrum representative of the "sound" sample.

5. Device for the comparative analysis of organic samples according to claim 2, characterised by the fact that downstream from said second computing unit (45), it includes an output unit (46) suitable for supplying on an appropriate support a scaled parameter of the differences existing between the spectrum of the sample being tested and the statistical spectrum representative of the "sound" sample, referred to the statistical spectrum representative of the sample containing the maximum level of impurities.

6. Procedure for the comparative analysis of organic samples, for the detection of foreign substances, characterised by the fact that it includes:

a) a preliminary phase consisting of the analysis of a pure sample,

b) a phase in which the representative parameters of the spectrum of said pure sample are stored,

c) a phase consisting of the analysis of a current sample,

d) a phase consisting of the comparison and amplification of the spectrum of the current sample with that of the pure reference sample.

7. Procedure for the comparative analysis of organic samples, for the detection of foreign substances, according to claim 6, characterised by the fact that it includes:

a) a preliminary phase consisting of the analysis of a pure sample,

b) a phase in which the representative parameters of the spectrum of said pure sample are stored,

b1) a phase consisting of the analysis of a sample containing the maximum level of impurities,

b2) a phase in which the parameters representative of the spectrum of said sample containing the maximum level of foreign matter are stored.

c) a phase consisting of the analysis of a current sample,

d) a first phase of comparison, preferably by subtraction, of the spectrum of the current sample with that of the pure reference sample,

d1) a second phase of comparison of the spectrum obtained in the previous phase with the statistical spectrum representative of the sample containing the maximum level of foreign matter.

8. Procedure for the comparative analysis of organic samples for edible products. in particular sugar beet, in order to detect foreign substances significant of the presence of the rhizomania virus. according to claim 6, characterised by the fact that the sample to be examined consists of the juice obtained by squeezing or centrifuging the flesh or fragments of the flesh of sugar beet.

Fig. 1

Fig. 2

Fig. 3

Fig. 4

Fig. 5

(DS)

Fig. 6

8

Fig. 7

Fig. 8

Fig. 9

Fig. 10